# EUROPEAN PATENT APPLICATION

(11) **EP 4 822 617 A1**
(43) Date of publication of application: **14.10.2026**
(21) Application number: 24900323.7
(22) Date of filing: 25.10.2024
(51) Int. Cl.: G06Q 10/06, G06Q 10/04, G06Q 50/04

(54) **INFORMATION PROCESSING DEVICE, CONTROL SYSTEM, INFORMATION PROCESSING METHOD, CONTROL METHOD, AND PROGRAM**

(30) Priority: 06.12.2023 JP 2023205903
(71) Applicant: Kurita Water Industries Ltd., Tokyo 164-0001 (JP)
(72) Inventor: FUKUDA, Chise, Tokyo 164-0001 (JP); SANO, Anna, Tokyo 164-0001 (JP)
(74) Representative: Becker, Eberhard
(86) International application number: PCT/JP2024/038253
(87) International publication number: WO 2025/121027

(57) **Abstract**

[Problem] To provide an information processing device and the like capable of allowing a user to easily and more efficiently manage a facility to be managed.

[Solution] According to one aspect of the present invention, provided is an information processing device that assists in the management of a facility to be managed. This information processing device is configured to be able to acquire a management item data group pertaining to the facility to be managed and an external environment factor for the facility to be managed and/or a facility not to be managed. The information processing device comprises a processor. The processor is configured to be able to execute the following steps. In a first reception step, two or more management items for the facility to be managed are received from a user. In a second reception step, a future time condition is received from the user. In a first prediction step, the states of the management items under the future time condition are predicted on the basis of the received future time condition and the temporal transition of the management item data group.

## Description

### Technical Field

The present disclosure relates to an information processing apparatus, a control system, an information processing method, a control method, and a program.

### Background Art

Conventionally, techniques for controlling predetermined facilities have been developed. For example, Patent Literature 1 discloses a social infrastructure control system including a control device that locally controls social infrastructure and a server capable of communicating with the control device. Furthermore, Patent Literature 2 discloses a water treatment system including a controller that predicts the water quality of wastewater discharged from plant facilities and performs feedforward control of operating conditions of water treatment facilities based on the predicted water quality.

### Citation List

### Patent Literature

| | |
|---|---|
| Patent Literature 1: | WO 2013/172088 A1 |
| Patent Literature 2: | WO 2017/022113 A1 |

### SUMMARY

### Problems to be Solved by Invention

However, due to various demands, the purposes for managing predetermined facilities have become increasingly diverse in recent years. Therefore, there is a growing need for technologies that enable users to more easily manage facilities to be managed.

In view of the above circumstances, the present disclosure provides an information processing apparatus and the like that enable a user to more easily and efficiently manage facilities to be managed. Furthermore, as a more preferred aspect, the present disclosure provides an information processing apparatus and the like that enable a user to manage facilities to be managed based on target values and options.

### Solution to Problem

According to one aspect of the present disclosure, there is provided an information processing apparatus that supports management of a facility to be managed. The information processing apparatus is configured to acquire a data group of management items relating to the facility to be managed, a facility not to be managed, and/or an external environmental factor affecting the facility to be managed. The information processing apparatus comprises a processor. The processor is configured to execute the following steps. In a first reception step, two or more management matters for the facility to be managed are received from a user. In a second reception step, a future time condition is received from the user. In a first prediction step, states of the management matters under the future time condition is predicted based on the received future time condition and a temporal transition of the data group of the management items.

According to the above aspect, an information processing apparatus and the like are provided that enable a user to more easily and efficiently manage a facility to be managed.

### BRIEF DESCRIPTION OF DRAWINGS

[FIG. 1] is a conceptual diagram showing the overall configuration of an information processing system of the present embodiment.
[FIG. 2] is a diagram showing the hardware configuration of an information processing apparatus 1.
[FIG. 3] is a functional block diagram showing the functions of the information processing apparatus 1.
[FIG. 4] is an activity diagram showing a flow of information processing using the information processing apparatus 1 and the like.
[FIG. 5] is an activity diagram showing a flow of information processing using the information processing apparatus 1 and the like.
[FIG. 6] is a conceptual diagram for explaining details of a third reception step.
[FIG. 7] is a conceptual diagram for explaining a second selection step and a first presentation step.
[FIG. 8] is a conceptual diagram for explaining a fourth reception step.
[FIG. 9] is a conceptual diagram for explaining a second prediction step and a second presentation step.
[FIG. 10] is an activity diagram showing a flow of information processing using the information processing apparatus 1 and the like.

### DETAILED DESCRIPTION

Hereinafter, embodiments of the present disclosure will be described. Various features described in the embodiments below can be combined with each other.

A program for implementing software described in the present embodiment may be provided as a non-transitory computer-readable storage medium, may be made available for download from an external server, or may be provided in such a manner that the program can be activated on an external computer to implement the functions thereof on a client terminal (so-called cloud computing).

In the present embodiment, the term "unit" may also include, for example, a combination of hardware resources implemented by a circuit in a broad sense, and information processing performed by software that may be specifically implemented by such hardware resources. Furthermore, various kinds of information are handled in the present embodiment, and such information may be represented by, for example, physical values of signal values representing voltage and current, high and low signal values as a set of binary bits consisting of 0 or 1, or quantum superposition (so-called qubits), and communication and computation may be executed on a circuit in a broad sense.

Furthermore, the term "circuit in a broad sense" refers to a circuit that is implemented by appropriately combining at least one or more of a circuit, circuitry, a processor, memory, and the like. In other words, the term "circuit in a broad sense" includes an application specific integrated circuit (ASIC), a programmable logic device (e.g., a simple programmable logic device (SPLD), a complex programmable logic device (CPLD), a field programmable gate array (FPGA)), and the like.

### 1. Hardware Configuration

This section describes the hardware configuration of a system (also referred to as an information processing system) to which an information processing apparatus according to the present embodiment may be applied.

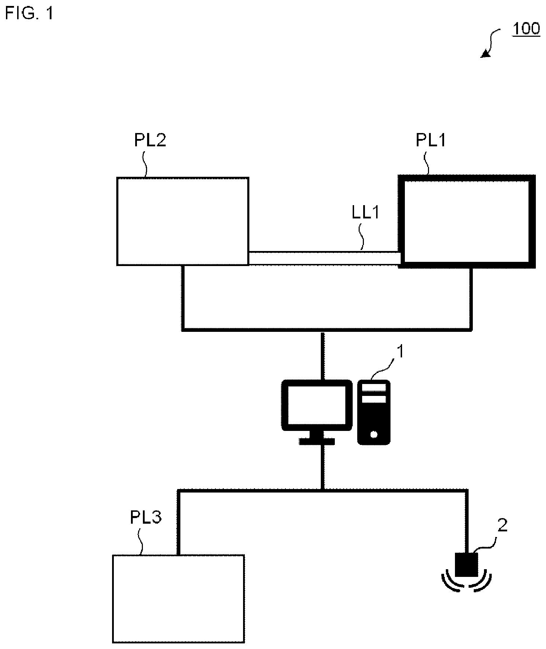

FIG. 1 is a conceptual diagram showing the overall configuration of the information processing system of the present embodiment. The information processing system 100 of the present embodiment typically comprises an information processing apparatus 1. In addition, the information processing apparatus 1 is configured to support management of a facility to be managed. In the information processing system 100 shown in FIG. 1, a plant PL1 is shown as the facility to be managed.

In the present embodiment, the information processing apparatus 1 is configured to acquire a data group of management items relating to a facility to be managed, a facility not to be managed, and/or an external environmental factor affecting the facility to be managed. Specifically, in the information processing system 100 shown in FIG. 1, the information processing apparatus 1 is connected via a communication line to the plant PL1, plants PL2 and PL3 described below, a sensor 2, and the like. That is, in the information processing system 100 of the present embodiment, the management items that can be acquired by the information processing apparatus 1 may include management items for the facility not to be managed. The communication line includes the Internet and the like, and mediates data exchange between facilities connected to the communication line. Furthermore, a system exemplified by the information processing system 100 comprises one or more devices or components. Therefore, even the information processing apparatus 1 alone is an example of a system.

As an example, the plant PL2 is a plant that performs a product production process, and the plant PL1 is a plant that functions as a wastewater treatment facility that treats wastewater from the product production process. That is, in the flow of the wastewater, the plant PL1 is located downstream of the plant PL2, and typically, the wastewater generated in the plant PL2 is transferred to the plant PL1 via a liquid line LL1.

The devices and the like arranged in the plant PL1 can be appropriately set according to the type of wastewater. For example, when the wastewater is water-based, a biological treatment device or the like may be provided in the plant PL1. Note that the biological treatment device is configured to use microorganisms or the like capable of purifying wastewater. Although not shown in FIG. 1, a sensor may also be attached to the liquid line LL1, and the sensor and the information processing apparatus 1 may be connected via a communication line.

Furthermore, the information processing apparatus 1 may be connected to the plant PL3 via a communication line. Here, the plant PL3 is not connected to the plant PL1, which is the plant to be managed, by a line or the like, but can function as a component of the information processing system 100 of the present embodiment. That is, in the information processing system 100 of the present embodiment, the management items for predetermined management matters are utilized, and the plant PL3 can provide an effective parameter for managing the facility to be managed, for example, due to circumstances such as being located in proximity.

In addition, the information processing apparatus 1 may be connected to the sensor 2 via a communication line. The sensor 2 is typically configured to acquire a parameter relating to an external environmental factor affecting the facility to be managed (plant PL1). More specific examples of the sensor 2 include a pH meter, a flow meter, a level meter, an ORP meter, a temperature sensor, a humidity sensor, a vibration sensor, a gas sensor (carbon dioxide sensor), and the like. Of course, the sensor 2 is not limited thereto, and the type of the sensor 2 may be appropriately set depending on the items to be managed. Note that FIG. 1 shows an example in which the sensor 2 is attached to the outside of the plant PL1; however, each of the above-described sensors 2 may be provided inside the plant PL1.

Although the facility to be managed is shown as the plant PL1 in the information processing system 100 in FIG. 1, the scale of the "facility to be managed" is not limited to a plant, and may be a specific device or assembly thereof. Furthermore, the facility to be managed is not limited to a facility located at a predetermined business site, and may be a facility or assembly thereof located at another business site in the region including the predetermined business site. Similarly, the plants PL2 and PL3 that do not correspond to the facility to be managed may also be specific devices or assemblies thereof, and are not limited to facilities located at a predetermined business site, and may be facilities or assemblies thereof located at another business site in the region including the predetermined business site. In addition, when the facility to be managed is related to an industrial field, the industrial field is not limited to the wastewater treatment described above, and may be various manufacturing fields (including chemical manufacturing, automobile manufacturing, steel manufacturing, paper manufacturing, food and beverage industry, etc.), a power generation field, or the like.

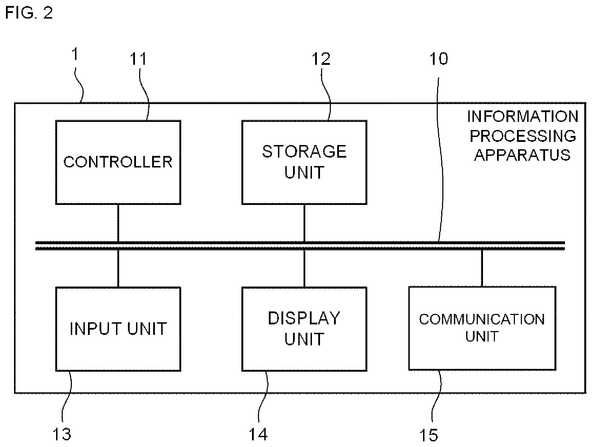

FIG. 2 is a diagram showing the hardware configuration of the information processing apparatus 1. The information processing apparatus 1 includes a controller 11, a storage unit 12, an input unit 13, a display unit 14, and a communication unit 15, and is configured such that these units are electrically connected by a communication bus 10. Hereinafter, each unit included in the information processing apparatus 1 will be described.

### (Controller 11)

The controller 11 is, for example, an unshown central processing unit (CPU) (may also be referred to as a "processor"). The controller 11 implements various functions pertaining to the information processing apparatus 1 by reading a predetermined program stored in the storage unit 12. That is, information processing by software stored in the storage unit 12 can be executed as each functional unit included in the controller 11 by being specifically implemented by the controller 11, which is an example of hardware. These will be described in further detail in the next section. Note that the controller 11 is not limited to being a single unit, and may be implemented with multiple controllers 11 for the individual functions. Moreover, a combination thereof may also be adopted.

### (Storage Unit 12)

The storage unit 12 stores various kinds of information defined by the foregoing description. The storage unit 12 may be implemented, for example, as a storage device such as a solid state drive (SSD) storing various programs and the like pertaining to the information processing apparatus 1 that are executed by the controller 11, or as a memory such as a random access memory (RAM) storing temporarily necessary information (arguments, arrays, or the like) pertaining to program operations. The storage unit 12 stores various programs, variables, and the like relating to the information processing apparatus 1 executed by the controller 11.

### (Input Unit 13)

The input unit 13 may be included in the housing of the information processing apparatus 1 or may be externally attached. For example, the input unit 13 may be implemented as a touchscreen integrated with the display unit 14. When implemented as a touchscreen, the user can input operations such as tapping, swiping, and the like. Of course, instead of a touchscreen, switch buttons, a mouse, a QWERTY keyboard and the like may be adopted. That is, the input unit 13 receives an operation input performed by the user. The input is transferred as an instruction signal to the controller 11 via the communication bus 10, and the controller 11 may perform predetermined control or computation as necessary.

### (Display Unit 14)

The display unit 14 may, for example, be included in the housing of the information processing apparatus 1 or may be externally attached. The display unit 14 displays a screen of a graphical user interface (GUI) that can be operated by a user. For example, it is preferable to implement the display device by selectively using, according to the type of the information processing apparatus 1, a CRT display, a liquid crystal display, an organic EL display, a plasma display, or the like.

### (Communication Unit 15)

The communication unit 15 is configured to transmit various electrical signals from the information processing apparatus 1 to external components. The communication unit 15 is also configured to receive various electrical signals from external components to the information processing apparatus 1. The communication unit 15 may have a network communication function, thereby enabling communication of various types of information between the information processing apparatus 1 and external devices via a communication line.

Furthermore, although not shown, the plant PL1, the plant PL2, and the plant PL3 connected to the information processing apparatus 1 via the communication line may also include devices having the same hardware configuration as that of the information processing apparatus 1 described above.

In FIG. 2, the information processing apparatus 1 has been described as including the controller 11, the storage unit 12, the input unit 13, the display unit 14, and the communication unit 15; however, for example, the controller 11 and the storage unit 12 may be provided in an externally constructed device such as a cloud server, and may be configured to function as a virtually integrated information processing apparatus 1 through the transmission and reception of electrical signals with the information processing apparatus 1.

### 2. Functional Configuration

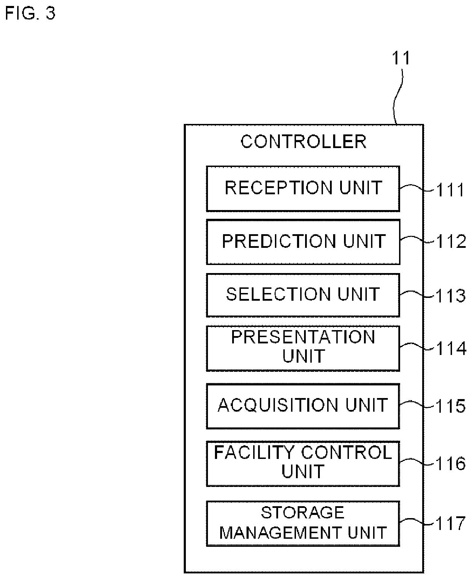

This section describes the functional configuration of the present embodiment. FIG. 3 is a functional block diagram showing the functions of the information processing apparatus 1. As described above, information processing by software (stored in the storage unit 12) is specifically implemented by hardware (the controller 11), and can be executed as each functional unit included in the controller 11.

Specifically, the information processing apparatus 1 (controller 11) may include, as each functional unit, a reception unit 111, a prediction unit 112, a selection unit 113, a presentation unit 114, an acquisition unit 115, a facility control unit 116, and a storage management unit 117. Note that each of such functional units may be appropriately increased or omitted according to the application or the like to which the information processing apparatus 1 is applied.

### (Reception Unit 111)

The reception unit 111 is configured to execute a reception step. In the reception step, the reception unit 111 receives various kinds of information. In the present embodiment, the reception unit 111 receives, from a user, two or more management matters for the facility to be managed as a first reception step. Furthermore, the reception unit 111 receives a future time condition from the user as a second reception step. Furthermore, as a third reception step, the reception unit 111 receives target values for each of the management matters from the user after executing the first prediction step. Furthermore, as a fourth reception step, the reception unit 111 receives, from the user, a designation of one of the options presented in the first presentation step. Details of each step will be described later.

### (Prediction Unit 112)

The prediction unit 112 is configured to execute a prediction step. In the prediction step, the prediction unit 112 predicts a (future) state relating to a predetermined target based on the received information and the like. In the present embodiment, the prediction unit 112 predicts, as a first prediction step, states of the management matters under the future time condition based on the received future time condition and a temporal transition of the data group of management items. Furthermore, the prediction unit 112 predicts, as a second prediction step, future states of the management matters based on the received option. Details of each step will be described later.

### (Selection Unit 113)

The selection unit 113 is configured to execute a selection step. In the selection step, the selection unit 113 selects a specific candidate from among a plurality of types of candidates based on the received various kinds of information. In the present embodiment, the selection unit 113 selects, as a first selection step, high-priority management items from the data group of management items based on the received management matters. Furthermore, the selection unit 113 selects, as a second selection step, a plurality of types of combinations of the high-priority management items and values corresponding to the high-priority management items based on the target values for each of the received management matters. Details of each step will be described later.

### (Presentation Unit 114)

The presentation unit 114 is configured to execute a presentation step. In the presentation step, the presentation unit 114 presents various kinds of information. Specifically, the presentation unit 114 controls the display unit 14 of the information processing apparatus 1 to display visual information such as screens, images, icons, and messages. The presentation unit 114 may generate only rendering information for causing a predetermined terminal to display the visual information as described above. Furthermore, the information presented by the presentation unit 114 is not limited to visual information, and may be auditory information. In the present embodiment, as a first presentation step, the presentation unit 114 presents, as options, each of the combinations of the high-priority management items and the values corresponding to the high-priority management items selected in the second selection step. Furthermore, the presentation unit 114 presents, as a second presentation step, the future states of the management matters predicted in the second prediction step to the user. Details of each step will be described later.

### (Acquisition Unit 115)

The acquisition unit 115 is configured to execute an acquisition step. In the acquisition step, the acquisition unit 115 acquires, as set values, the values corresponding to the high-priority management items associated with the options presented by the information processing apparatus 1. The acquisition step acquires the set values based on a human operation or selection by a processor.

### (Facility Control Unit 116)

The facility control unit 116 is configured to execute a control step (facility control step). In the control step (facility control step), the facility control unit 116 controls the facility to be managed based on the acquired set values. As a specific aspect of this control, an aspect is exemplified in which the facility control unit 116 automatically changes control conditions for the facility to be managed. Furthermore, an aspect is exemplified in which the facility control unit 116 presents an instruction to change the control conditions, and an operator manages the operation under the presented control conditions.

### (Storage Management Unit 117)

The storage management unit 117 is configured to execute a storage management step. In the storage management step, the storage management unit 117 is configured to manage various kinds of information to be stored relating to processes and the like of the present embodiment. Typically, the storage management unit 117 is configured to store information and the like handled by the information processing apparatus 1 in a storage area. The storage area is exemplified by, for example, the storage unit 12 of the information processing apparatus 1 or storage units of various devices or terminals; however, the storage area is not necessarily within the process shown in FIG. 1, and the storage management unit 117 can also manage various kinds of information so as to be stored in an external storage device or the like.

### 3. Details of Information Processing

In the third section, an information processing method executed by the information processing apparatus 1 and the like will be described with reference to activity diagrams and the like. In this section, the details of the information processing will be explained by dividing it into the first to third embodiments.

### [First Embodiment]

In the information processing method of the first embodiment, the controller 11 (processor) of the information processing apparatus 1 executes the first reception step, the second reception step, and the first prediction step described below. Here, the first reception step is a step of receiving, from a user, two or more management matters for the facility to be managed. The second reception step is a step of receiving a future time condition from the user. The first prediction step is a step of predicting states of the management matters under the future time condition based on the received future time condition and a temporal transition of a data group of management items.

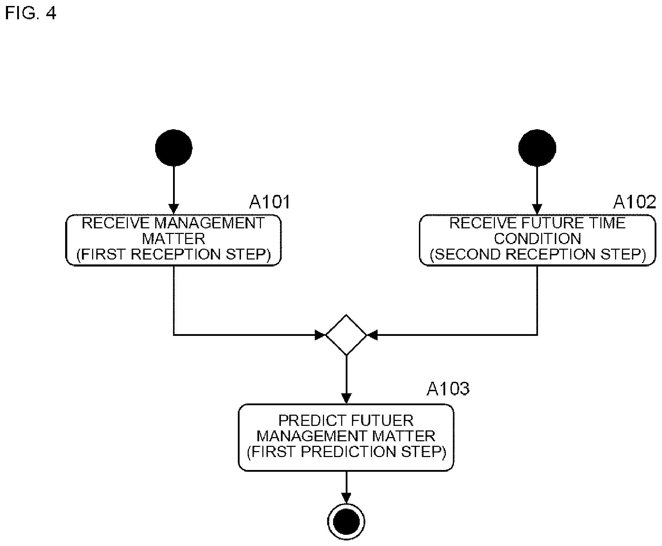

FIG. 4 is an activity diagram showing a flow of information processing using the information processing apparatus 1 and the like. That is, in the first embodiment, as the first reception step, the reception unit 111 receives, from a user, two or more management matters for the facility to be managed (Activity A101).

Here, the "management matter" is a matter to be managed for the facility to be managed, and in the information processing system 100 shown in FIG. 1, is the content to be managed for the plant PL1. The management matter may have either quantitative or qualitative content. Since the management matter corresponds to the objectives to be achieved for the facility to be managed, the "management matter" may also be referred to as an "objective variable."

Typically, the management matter may be a matter relating to any one selected from the group consisting of laws and regulations, productivity, resource availability, energy saving, labor saving, cost reduction, and environmental hygiene. In many application examples, when two or more management matters are managed, these management matters may have a trade-off relationship; however, the information processing apparatus 1 of the present embodiment can be applied without such a trade-off relationship being a problem.

Note that, for example, when the plant PL1 in FIG. 1 is a wastewater treatment facility, from a certain viewpoint, the management matter of cost reduction and the management matter of environmental hygiene may have a trade-off relationship. That is, considering the aspect of environmental hygiene when discharging wastewater (effluent), it is desirable to increase the level of treatment, whereas increasing the level of treatment is likely to result in higher costs. The information processing apparatus 1 of the present embodiment can provide technology that is useful when evaluating this balance.

As described above, the management matters of the present embodiment may be matters relating to two or more mutually different categories among the categories listed above. On the other hand, the management matters of the present embodiment may be two or more matters relating to the same category depending on the application. Furthermore, the management matters in the present embodiment are not limited thereto, and management matters other than the categories listed above may also be adopted depending on the application.

Furthermore, the user who inputs information into the reception unit 111 may be a person involved in the facility to be managed (plant PL1). A typical example may be an operator of the facility to be managed (plant PL1), but is not limited thereto.

On the other hand, in the information processing method of the first embodiment, the reception unit 111 receives a future time condition from the user, as the second reception step (Activity A102). The "future time condition" in this step relates to a time in the future relative to the time at which the user performs an input operation. The time condition may be set in units of minutes, hours, days, weeks, or years, but is not limited thereto. The "future time condition" may indicate a predetermined point in time or a predetermined time period.

Note that the execution order of Activity A101 and Activity A102 may be appropriately adjusted. That is, either one of Activity A101 and Activity A102 may be executed first, or these may be executed simultaneously.

When Activity A101 and Activity A102 are executed in this manner, the states of the management matters under the future time condition are predicted as the first prediction step based on the received future time condition and a temporal transition of a data group of management items (Activity A103).

As shown in FIG. 1, the information processing apparatus 1 is configured to acquire a data group of management items relating to a facility to be managed (plant PL1), a facility not to be managed (plants PL2, PL3, and the like), and/or external environmental factors affecting the facility to be managed (a factor that can be acquired by the sensor 2, a factor that can be acquired from the web, a factor that can be acquired from information published by a public institution, and the like). That is, in the first embodiment, since various kinds of information that may be involved in the state of the facility to be managed (plant PL1) can be acquired, the states of the management matters under the future time condition can be predicted with high accuracy. Note that the "management items" here correspond to parameters contributing to the management matters, and thus may be referred to as "explanatory variables."

Specifically, this prediction may be performed by referring to operation results and future operation plans of the facility to be managed (plant PL1), operation results and future operation plans of other facilities, external environmental factors and the like (for example, weather, changes in temperature and humidity, water quality of rivers, regional population, CO₂ emissions of business sites in a region, and the like) to predict the state of the facility to be managed under the future time condition received from the user. This prediction may be executed based on a regression model (linear model) based on data acquired from facilities and sensors involved in the information processing system 100, an artificial intelligence (AI) model trained using data acquired from facilities and sensors involved in the information processing system 100, a lookup table based on data acquired from facilities and sensors involved in the information processing system 100, or the like. Of course, the present disclosure is not limited thereto, and a known analysis method based on the obtained data group may be adopted.

The predicted data may be presented to the user as appropriate. Typically, the predicted result may be displayed on the display unit 14 of the information processing apparatus 1, but is not limited thereto, and a predetermined printed material relating to the predicted data may be issued, or the predicted data may be displayed on a device different from the information processing apparatus 1. Furthermore, the predicted data may be stored in a cloud so that users having security authority may be authenticated to check the data online. The presented data may be predicted contents of two or more management matters at a predetermined point in time or a temporal transition from the present to a predetermined point in time (a point in time corresponding to the future time condition).

Furthermore, various kinds of information received and predicted in the first embodiment may be stored in a predetermined storage area (for example, the storage unit 12 or the like) by the function of the storage management unit 117. Note that a model or the like used for prediction may be updated based on the information stored in this manner.

### [Second Embodiment]

Next, an information processing method of the second embodiment will be described. In the information processing method of the second embodiment, the information processing apparatus 1 executes a first reception step and a first selection step. In the first reception step, two or more management matters for the facility to be managed are received from a user. In the first selection step, high-priority management items are selected from a data group of management items based on the received management matters.

Such an information processing method will be explained with reference to specific aspects. In the second embodiment, description of parts overlapping with those of the first embodiment will be omitted, and only different parts will be described.

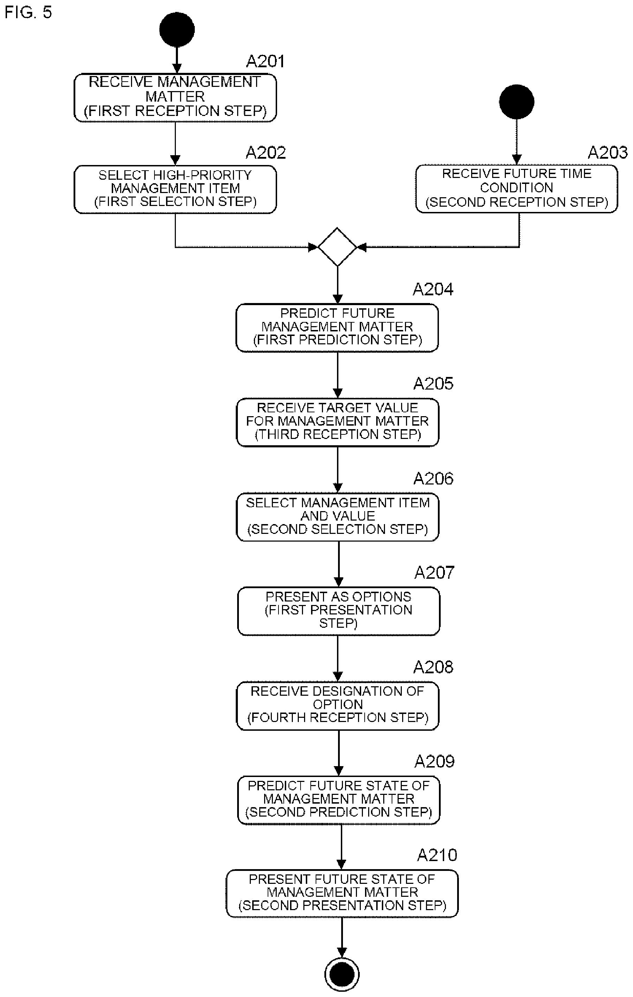

FIG. 5 is an activity diagram showing a flow of information processing using the information processing apparatus 1 and the like. That is, in the second embodiment, the reception unit 111 receives, from the user, two or more management matters for the facility to be managed as the first reception step (Activity A201). The first reception step is substantially the same as the first reception step of the first embodiment, and thus the description thereof is omitted here.

In the second embodiment, high-priority management items are selected from a data group of management items based on the received management matters as the first selection step (Activity A202). As described above, in the information processing system 100 of the present embodiment, the information processing apparatus 1 is configured to communicate with other facilities (plants PL2, PL3), the sensor 2, and the like in addition to the facility to be managed (plant PL1), and is configured to acquire various parameters (data group of management items) from various devices. The selection unit 113 of the information processing apparatus 1 treats the management matters received in the first reception step as objective variables and the data group of management items that can be acquired by the information processing apparatus 1 as explanatory variables, and selects a management item having a significant contribution to the management matters received in the first reception step. As described above, when two or more management matters are managed, these management matters may be in a trade-off relationship; however, the information processing apparatus 1 of the present embodiment may be configured to select a management item that can efficiently resolve such a trade-off relationship. The number of such management items may be one or two or more. On the other hand, an upper limit value of the number of management items to be selected may be appropriately set depending on processing capability or the like of the information processing apparatus 1.

As a typical example, when a user inputs items such as compliance with laws and regulations and productivity improvement as management matters in the plant PL1, management items such as productivity (yield rate or the like) of the plant PL2 and raw water quality of the plant PL1, which are highly relevant to these items, may be selected. Such processing is executed, for example, as follows. That is, one or more purposes are associated with each of various management items in advance and set as a master table, and similarly, one or more purposes are associated with each of various management matters and set as a master table. In response to this, when the user selects the management matters, necessary management items are selected as high-priority management items from among the management items having a common purpose with the management matters.

The selection of such high-priority management items may be performed with ranking according to the level of priority. The priority of the management item may be set so as to result in a different ranking depending on the conditions of other factors that affect the management item. For example, in a case where data on raw water quality (drainage system) is acquired and compliance with laws and regulations is set as a management matter, it is conceivable to set a high priority for the raw water quality (drainage system) as a management item if the water quality behavior exceeds a predetermined value.

While the high-priority management items are selected in this manner, in the present embodiment, a future time condition is received from the user as a second reception step (Activity A203). Since this Activity A203 is substantially the same as Activity A102 of the first embodiment, the description thereof is omitted here.

Subsequently, the information processing apparatus 1 predicts states of the management matters under the future time condition as a first prediction step based on the future time condition received in the second reception step and a temporal transition of the data group of management items selected in the first selection step (Activity A204). That is, in the second embodiment as well, the states of the management matters in the future can be predicted as in the first embodiment. In this manner, the future states of the management matters can be efficiently predicted.

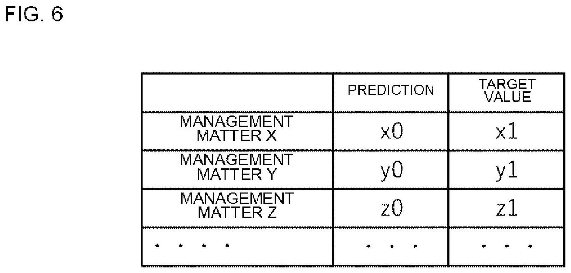

Furthermore, in the information processing method of the second embodiment, after execution of the first prediction step, target values for each of the management matters are received from the user as a third reception step (Activity A205). An aspect of receiving the target values will be described with reference to FIG. 6. FIG. 6 is a conceptual diagram for explaining details of the third reception step. In a typical example, when the first prediction step described above is executed, predicted values (x0, y0, z0) for each of the management matters (management matters X, Y, Z) for the facility to be managed are presented. This presentation may be implemented, for example, by a function of the presentation unit 114. A user who has seen such predicted values can consider target values (target values; x1, y1, z1) for each of the management matters and input the values through a terminal operation or the like.

When the target values are input from the user in this manner, a plurality of types of combinations of the high-priority management items and the values corresponding to the high-priority management items are selected as a second selection step based on the target values for each of the received management matters (Activity A206). Furthermore, as a first presentation step, each of the combinations of the high-priority management items and the values corresponding to the high-priority management items selected in the second selection step is presented as options (Activity A207).

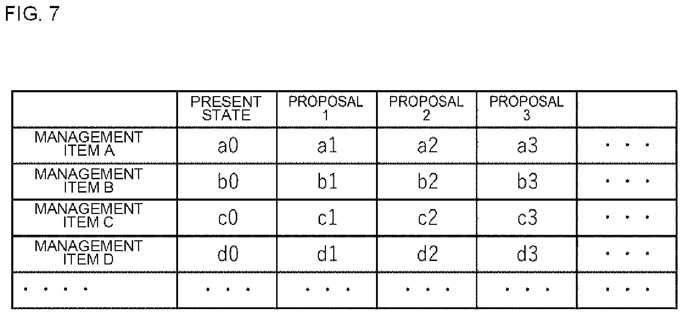

FIG. 7 is a conceptual diagram for explaining the second selection step and the first presentation step. That is, through the second selection step and the first presentation step, an aspect (a combination of management items and values (set values)) that conforms to the target values received in the third reception step described above can be displayed to the user. In the example of FIG. 6, the target values such as x1, y1, and z1 are received for respective management matters X, Y, and Z, and in the second selection step, combinations of management items and values that can result in x1, y1, and z1 are selected and presented to the user. Specifically, in FIG. 7, set values corresponding to each of the management items are proposed as "Proposal 1", "Proposal 2", "Proposal 3", and the like.

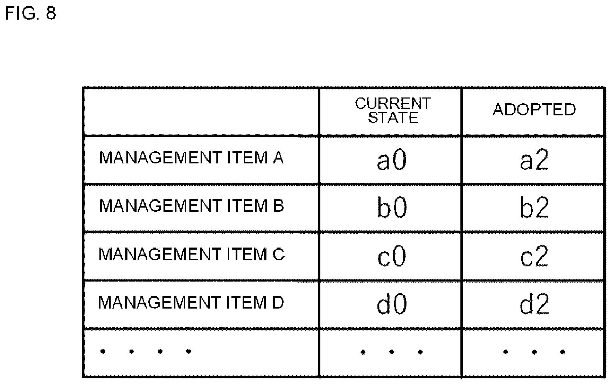

In response to this, a designation of one of the options presented in the first presentation step is received from the user as a fourth reception step (Activity A208). That is, when the user designates one of the proposals (Proposal 1, Proposal 2, Proposal 3, and the like) presented in FIG. 7, the reception unit 111 receives a combination of the management items and the set values corresponding to each of the management items. FIG. 8 is a conceptual diagram for explaining the fourth reception step. FIG. 8 shows an aspect in which the aforementioned "Proposal 2" has been selected by the user.

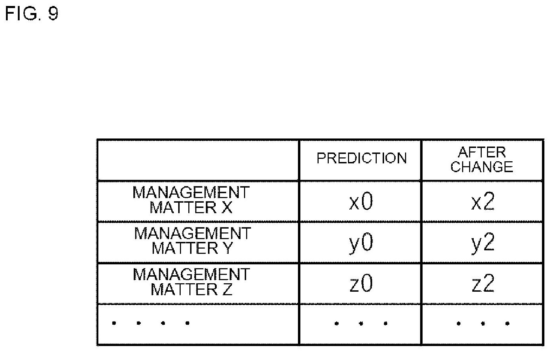

When the fourth reception step is executed in this manner, future states of the management matters are predicted based on the received option as a second prediction step (Activity A209). Furthermore, the future states of the management matters predicted in the second prediction step are presented to the user as a second presentation step (Activity A210). FIG. 9 is a conceptual diagram for explaining the second prediction step and the second presentation step. As shown in FIG. 9, when the aforementioned "Proposal 2" is adopted, it is possible to present to the user what state each of the management matters will be in (x2, y2, z2, or the like).

Note that, prior to executing the second prediction step, a value or the like corresponding to the option received in the fourth reception step may be changed by a terminal operation by the user or the like. In this case, the second prediction step is executed based on the changed value or the like.

In addition, the presentation in the second presentation step may indicate a state at a point in time corresponding to the time condition previously received from the user, or may indicate a state in a predetermined time period. The second presentation step may be configured to present a future temporal transition of the management matters. That is, regarding the management matters relating to the facility to be managed, how the management matters will transition from the present to the future may be presented to the user. Typically, the temporal transition of the management matters may be presented to the user by a graph in which the horizontal axis represents time and the vertical axis represents the management matters (each of two or more management matters).

As described above, the management relating to the facility to be managed can be made more reliable.

### [Third Embodiment]

Next, a third embodiment will be described. In an information processing method (control method) of the third embodiment, a predetermined apparatus executes an acquisition step and a control step (facility control step). In the acquisition step, values corresponding to the high-priority management items associated with the options presented by the information processing apparatus 1 are acquired as set values. Here, in the acquisition step, the set values are acquired based on a human operation or selection by a processor. In the control step, the facility to be managed is controlled based on the acquired set values.

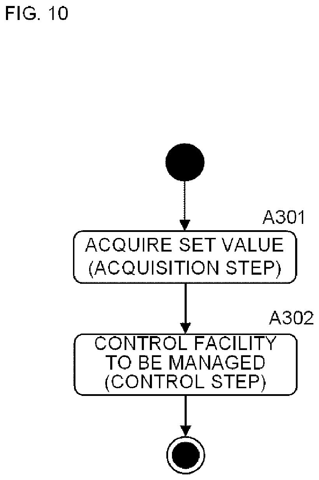

FIG. 10 is an activity diagram showing a flow of information processing using the information processing apparatus 1 and the like. That is, the information processing method (control method) of the third embodiment includes acquiring, as set values, the values corresponding to the high-priority management items associated with the options presented in the second embodiment (acquisition step), and controlling the facility to be managed (control step (facility control step)) (see Activities A301 and A302). As described above, in a case where the information processing apparatus 1 includes the acquisition unit 115 and the facility control unit 116, the information processing apparatus 1 itself may execute acquisition of values or the like corresponding to the high-priority management items and control of the facility to be managed based on these functions. On the other hand, a predetermined device not shown in FIG. 1 may acquire values or the like corresponding to the high-priority management items associated with the options presented by the information processing apparatus 1 and then execute control of the facility to be managed. Note that the set values acquired in the acquisition step may be input manually or may be automatically set based on the functions or the like of the information processing apparatus 1. Additionally, the execution of the control step (facility control step) may be performed manually or may be automatically executed based on the functions of the predetermined device.

The "high-priority management items" in the acquisition step may be management items selected in the first selection step. In that case, the set values corresponding to various management items are exemplified as being input manually. On the other hand, the "high-priority management items" in the acquisition step may be the combinations of the management items and the values corresponding to the high-priority management items selected in the second selection step. In this case, such values can be utilized as set values to execute control of the facility.

### 4. Others

The fourth section describes modified examples of the information processing method of the information processing system 100 described above.

Although the above embodiment has been described as the configuration of the information processing apparatus 1, a program causing at least one computer to execute the steps implemented by the information processing apparatus 1 may be provided. Furthermore, a program causing at least one computer to execute the steps implemented by the control system described above may be provided.

Finally, although various embodiments of the present disclosure have been described, these are presented merely as examples and are not intended to limit the scope of the disclosure. Novel embodiments can be implemented in various other forms, and various omissions, replacements, and modifications can be made within the scope of the spirit of the disclosure. The embodiments and its modifications are included in the scope and the spirit of the disclosure and are included in the scope of the disclosure described in claims and the equivalent scope thereof.

Furthermore, the present disclosure may be provided in each of the following aspects.
(1) An information processing apparatus that supports management of a facility to be managed and that is configured to acquire a data group of management items relating to the facility to be managed, a facility not to be managed, and/or an external environmental factor affecting the facility to be managed, the information processing apparatus comprising a processor configured to execute each step of: a first reception step of receiving, from a user, two or more management matters for the facility to be managed; a second reception step of receiving a future time condition from the user; and a first prediction step of predicting states of the management matters under the future time condition based on the received future time condition and a temporal transition of the data group of the management items.
(2) An information processing apparatus that supports management of a facility to be managed and that is configured to acquire a data group of management items relating to the facility to be managed, a facility not to be managed, and/or an external environmental factor affecting the facility to be managed, the information processing apparatus comprising a processor configured to execute each step of: a first reception step of receiving, from a user, two or more management matters for the facility to be managed; and a first selection step of selecting high-priority management items from the data group of the management items based on the received management matters.
(3) The information processing apparatus according to (2), wherein: the processor is configured to execute a second reception step of receiving a future time condition from the user, and a first prediction step of predicting states of the management matters under the future time condition based on the received future time condition and a temporal transition of the data group of the management items.
(4) The information processing apparatus according to (3), wherein: the processor is configured to execute a third reception step of receiving target values for each of the management matters from the user after executing the first prediction step, a second selection step of selecting a plurality of types of combinations of the high-priority management items and values corresponding to the high-priority management items based on the target values for each of the received management matters, and a first presentation step of presenting, as options, each of the combinations of the high-priority management items and the values corresponding to the high-priority management items selected in the second selection step.
(5) The information processing apparatus according to (4), wherein: the processor is configured to execute a fourth reception step of receiving, from the user, a designation of one of the options presented in the first presentation step, a second prediction step of predicting future states of the management matters based on the received option, and a second presentation step of presenting the future states of the management matters predicted in the second prediction step to the user.
(6) The information processing apparatus according to (5), wherein: the second presentation step includes presenting a future temporal transition of the management matters.
(7) The information processing apparatus according to any one of (1) to (6), wherein: each of the management matters is a matter relating to any one selected from a group consisting of laws and regulations, productivity, resource availability, energy saving, labor saving, cost reduction, and environmental hygiene.
(8) The information processing apparatus according to any one of (1) to (7), wherein: the management items acquired by the information processing apparatus include management items for the facility not to be managed.
(9) A control system that controls a facility to be managed, the control system comprising a processor configured to execute each step of: an acquisition step of acquiring, as set values, the values corresponding to the high-priority management items associated with the options presented by the information processing apparatus according to any one of (4) to (6), the acquisition step including acquiring the set values based on a human operation or selection by the processor; and a control step of controlling the facility to be managed based on the acquired set values.
(10) An information processing method, comprising: the steps implemented by the information processing apparatus according to any one of (1) to (8).
(11) A control method, comprising: the steps implemented by the control system according to claim 9.
(12) A program causing a computer to execute the steps implemented by the information processing apparatus according to any one of (1) to (8).

Of course, the present disclosure is not limited to the above aspects.

### REFERENCE SIGNS LIST

1: Information processing apparatus
2: Sensor
10: Communication bus
11: Controller
12: Storage unit
13: Input unit
14: Display unit
15: Communication unit
100: Information processing system
111: Reception unit
112: Prediction unit
113: Selection unit
114: Presentation unit
115: Acquisition unit
116: Facility control unit
117: Storage management unit
LL1: Liquid line
PL1, PL2, PL3: Plant

## Claims

1. An information processing apparatus that supports management of a facility to be managed and that is configured to acquire a data group of management items relating to the facility to be managed, a facility not to be managed, and/or an external environmental factor affecting the facility to be managed,
the information processing apparatus comprising a processor configured to execute each step of:
a first reception step of receiving, from a user, two or more management matters for the facility to be managed;
a second reception step of receiving a future time condition from the user; and
a first prediction step of predicting states of the management matters under the future time condition based on the received future time condition and a temporal transition of the data group of the management items.

2. An information processing apparatus that supports management of a facility to be managed and that is configured to acquire a data group of management items relating to the facility to be managed, a facility not to be managed, and/or an external environmental factor affecting the facility to be managed,
the information processing apparatus comprising a processor configured to execute each step of:
a first reception step of receiving, from a user, two or more management matters for the facility to be managed; and
a first selection step of selecting one or more high-priority management items from the data group of the management items based on the received management matters.

3. The information processing apparatus according to claim 2, wherein:
the processor is configured to execute
a second reception step of receiving a future time condition from the user, and
a first prediction step of predicting states of the management matters under the future time condition based on the received future time condition and a temporal transition of the data group of the management items.

4. The information processing apparatus according to claim 3, wherein:
the processor is configured to execute
a third reception step of receiving target values for each of the management matters from the user after executing the first prediction step,
a second selection step of selecting a plurality of types of combinations of the high-priority management items and values corresponding to the high-priority management items based on the target values for each of the received management matters, and
a first presentation step of presenting, as options, each of the combinations of the high-priority management items and the values corresponding to the high-priority management items selected in the second selection step.

5. The information processing apparatus according to claim 4, wherein:
the processor is configured to execute
a fourth reception step of receiving, from the user, a designation of one of the options presented in the first presentation step,
a second prediction step of predicting future states of the management matters based on the received option, and
a second presentation step of presenting the future states of the management matters predicted in the second prediction step to the user.

6. The information processing apparatus according to claim 5, wherein:
the second presentation step includes presenting a future temporal transition of the management matters.

7. The information processing apparatus according to any one of claims 1 to 6, wherein:
each of the management matters is a matter relating to any one selected from a group consisting of laws and regulations, productivity, resource availability, energy saving, labor saving, cost reduction, and environmental hygiene.

8. The information processing apparatus according to any one of claims 1 to 7, wherein:
the management items acquired by the information processing apparatus include a management item for the facility not to be managed.

9. A control system that controls a facility to be managed, the control system comprising a processor configured to execute each step of:
an acquisition step of acquiring, as set values, the values corresponding to the high-priority management items associated with the options presented by the information processing apparatus according to any one of claims 4 to 6, the acquisition step including acquiring the set values based on a human operation or selection by the processor; and
a control step of controlling the facility to be managed based on the acquired set values.

10. An information processing method, comprising:
the steps implemented by the information processing apparatus according to any one of claims 1 to 8.

11. A control method, comprising:
the steps implemented by the control system according to claim 9.

12. A program causing a computer to execute the steps implemented by the information processing apparatus according to any one of claims 1 to 8.
